Europäisches Patentamt

European Patent Office

Office européen des brevets

(11) Veröffentlichungsnummer: **0 224 703 B1**

# EUROPÄISCHE PATENTSCHRIFT

(45) Veröffentlichungstag der Patentschrift: **08.01.92**

(51) Int. Cl.⁵: **H02B 11/04**

(21) Anmeldenummer: **86114591.0**

(22) Anmeldetag: **21.10.86**

(54) Geschotteter Schaltschrank.

(30) Priorität: **05.12.85 DE 3542979**

(43) Veröffentlichungstag der Anmeldung:
**10.06.87 Patentblatt 87/24**

(45) Bekanntmachung des Hinweises auf die
Patenterteilung:
**08.01.92 Patentblatt 92/02**

(84) Benannte Vertragsstaaten:
**AT BE CH DE GB LI NL SE**

(56) Entgegenhaltungen:
**CH-A- 558 600**
**GB-A- 1 601 044**
**US-A- 1 729 864**

(73) Patentinhaber: **Sachsenwerk Aktiengesellschaft**
**Einhauser Strasse 9**
**W-8400 Regensburg 1(DE)**

(72) Erfinder: **Herrmann, Johann, Ing. (grad.)**
**Ruckäckerweg 7**
**W-8400 Regensburg(DE)**

(74) Vertreter: **Breiter, Achim, Dipl.-Ing.**
**AEG Aktiengesellschaft, Theodor-Stern-Kai 1**
**W-6000 Frankfurt am Main 70(DE)**

**Beschreibung**

Die Erfindung betrifft einen geschotteten Schaltschrank gemäß dem Oberbegriff des Anspruch 1.

Ein derartiger geschotteter Schaltschrank ist aus der CH-A-588 600 bekannt, bei dem ein am Schaltwagen drehbar gelagerter Hebel mit einem Mitnehmer sowohl mit einer fest im Gehäuse angebauten Kulisse als Vorschubantrieb, als auch mit einer im Gehäuse drehbar gelagerten Schwenkplatte als Verbindungsglied zum Öffnungs- und Schließmechanismus der Blenden zusammenwirkt. Die Teile sind so geformt, daß durch die Betätigung des Vorschubantriebs von der Trennstellung aus bei geschlossenen Blenden erst ein Abschnitt des Einfahrweges zurückgelegt wird. Daran anschließend erfolgt bei Stillstand des Schaltwagens die Öffnung der Blenden und danach das Durchfahren des zweiten Wegabschnitts bis zur Betriebsstellung.

Dieser Bewegungsablauf hat als Nachteil eine relativ große Tiefe des Schaltschranks und somit eine große Grundfläche des Anlagengebäudes zur Folge. Er bedingt außerdem eine in der Herstellung aufwendige, mehrfach gekröpfte Kulisse, die zwangsläufig mit einem relativ langen Hebel zusammenarbeiten muß, da bei der Bewegung des Schaltwagens zwischen der Trenn- und der Betriebsstellung die Kulisse vom Mitnehmer des Hebels wegen ihrer Kröpfung nicht in beiden Richtungen durchlaufen werden kann. Dieser lange Hebelarm überträgt als weiterer Nachteil große Drehmomente auf den Vorschubantrieb, vor allem beim Einfahren des Leistungsschalters in die ortsfesten Trennkontakte, aber auch als Reaktion bei großen über den Leistungsschalter fließenden Kurzschlußströmen.

Die vorliegende Erfindung hat sich zur Aufgabe gestellt, einen geschotteten Schaltschrank gemäß dem Oberbegriff zu schaffen, bei dem Vorschubantrieb und Mechanismus zum Öffnen und Schließen der Blenden so ausgebildet sind, daß Schaltschränke mit minimalen Abmessungen, besonders in der Tiefe, entstehen.

Erfindungsgemäß wird dies durch einen Schaltschrank mit den Merkmalen des Anspruchs 1 erreicht.

Eine weitere Aufgabe der Erfindung besteht darin, für den Vorschubantrieb hohe Drehmomente, wie sie z.B.beim Einfahren in die ortsfesten Trennkontakte entstehen, zu vermeiden, um bei ferngesteuerten Schaltanlagen das Ein- und Ausfahren des Leistungsschalters mit einem Motorantrieb kleiner Leistung durchführen zu können. Dies wird vorteilhaft durch Verwendung einer geradlinigen, ungekröpften Kulisse erreicht, die eine kurz vor der Totpunktlage liegende Endstellung des Abtriebhebels des Vorschubantriebs in der Kulisse ermöglicht. Diese Ausführung stellt auch im Kurzschlußfall geringe Reaktionskräfte des Leistungsschalters auf den Vorschubantrieb sicher.

Ein weiterer Vorteil der Erfindung liegt in einer anderen, besonders einfachen Ausführung der Führung des Mitnehmers, bei der ein einseitig angeordneter Steg als Widerlager zur Abstützung des Mitnehmers beim Einfahren und eine Kante des Nockens des Öffnungs- und Schließmechanismus der Blenden in deren Offenstellung zur Abstützung beim Ausfahren vorgesehen werden.

Da die zusammenwirkenden Teile des Vorschubantriebs und des Öffnungs- und Schließmechanismus der Blenden nur eine geringe Gesamtbreite haben, können sie in vorteilhafter Weise auch bei vertikaler Achse des Vorschubantriebs unter dem Schaltwagen an der Grundfläche des Schaltschrankes angeordnet werden. Die damit ausgerüsteten Schaltschrhänke weisen dann auch in ihrer Breite minimale Abmessungen auf.

Die Einzelheiten der Erfindung werden im folgenden anhand von Zeichnungen näher erläutert. So zeigt

Fig. 1      eine vereinfacht dargestellte Seitenansicht des geschotteten Schaltschranks bei weggelassenen Seitenteilen von Schrank und Schaltwagen, wobei der Schaltwagen bei geschlossenen Blenden in Trennstellung steht,

Fig. 2      ein zu Fig. 1 gehörender Schnitt in der Draufsicht,

Fig. 3      die Seitenansicht wie Fig. 1, jedoch mit den Blenden in geöffneter Stellung,

Fig. 4      den unteren Teil der Seitenansicht ähnlich Fig. 1, wobei der Schaltwagen bei geöffneten Blenden in Betriebsstellung steht,

Fig. 5      die Seitenansicht wie Fig. 1, mit abgewandelter Führung für den Vorschubantrieb,

Fig. 6      einen zu Fig.5 gehörenden Schnitt in Draufsicht und

Fig. 7      den unteren Teil der Seitenansicht ähnlich Fig. 4, mit abgewandelter Führung für den Vorschubantrieb.

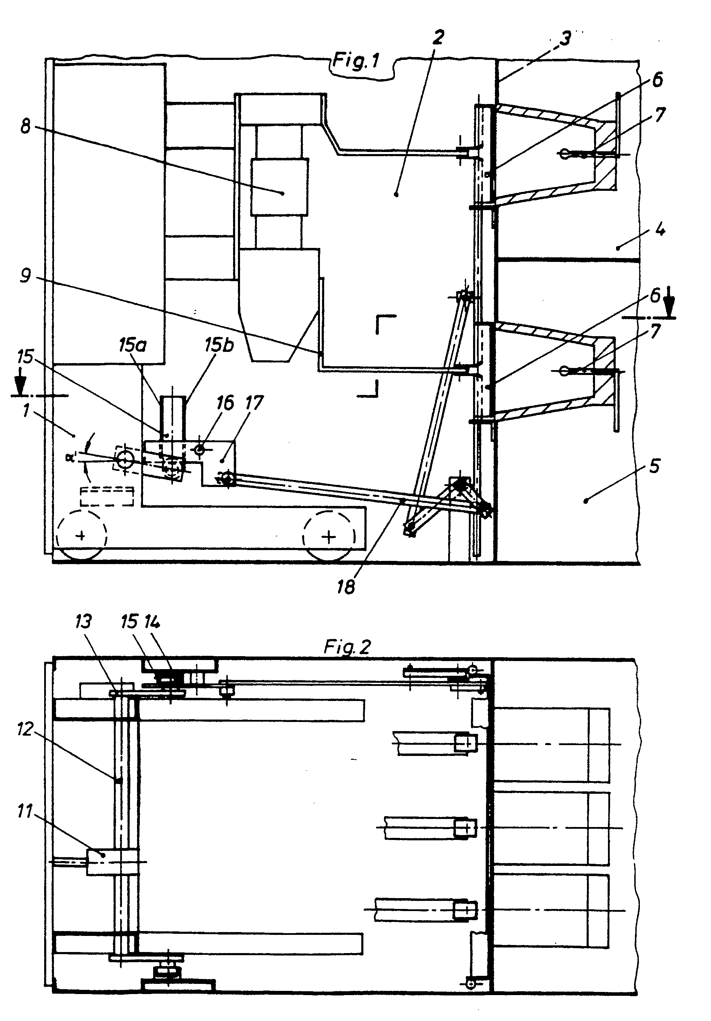

In Fig. 1 und 2 befindet sich der Schaltwagen 1 mit einem Leistungsschalter 8 und dessen Trennkontakten 9 in Trennstellung, die Tür des Schaltschranks ist dabei geschlossen.

Der Leistungsschalterraum 2 ist durch eine vertikale Schottwand 3 vom Sammelschienenraum 4 und vom Anschlußraum 5 getrennt. Die Schottung wird durch die beweglichen Blenden 6 vervollständigt, die die ortsfesten Trennkontakte 7 abdecken. Zum Vorschubantrieb 11 des Schaltwagens 1 gehört die Welle 12 mit dem Abtriebshebel 13 und dessen Mitnehmer 14, sowie die im Schaltschrank zur Führung des Mitnehmers befestigte U-förmige Kulisse 15. Der Schenkel 15 b der Kulisse ist länger als der Schenkel 15 a und bildet mit seinem verlängerten Teil den Anschlag für den Mitnehmer 14 beim Einschieben des Leistungsschalters 8 in die Trennstellung. Der Mitnehmer 14 kommt in der Trennstellung zusätzlich mit dem winkelförmigen Nocken 17 in Eingriff, der über den Öffnungs- und Schließmechanismus 18 die Betätigung der Blenden 6 bewirkt. In der Trennstellung ist mit α' der Winkel zwischen dem Abtriebshebel 13 und der Senkrechten auf die Achse der Kulisse 15 bezeichnet.

In Fig. 3 haben die Blenden 6 bei unveränderter Stellung des Schaltwagens 1 ihre geöffnete Stellung erreicht. Der Abtriebshebel 13 des Vorschubantriebs hat dabei den Nocken 17 verdreht und nimmt nun einen Winkel α'' gegenüber der Senkrechten auf die Achse der Kulisse 15 ein.

Die Winkel α' und α'' sind annähernd gleich, ihre Summe α' + α'' bildet den vorschubunwirksamen Abschnitt der Drehbewegung des Abtriebshebels.

Fig. 4 zeigt den Leistungsschalter 8 in Betriebsstellung, das heißt die galvanische Verbindung zwischen dem Schalter und den ortsfesten Trennkontakten 7 ist hergestellt. Zwischen den Stellungen in Fig. 3 und Fig. 4, also im vorschubwirksamen Abschnitt, hat der Mitnehmer 14 die Kulisse 15 je einmal in beiden Richtungen durchlaufen. In der Offenstellung der Blenden 6 stützt sich der Nocken 17 mit einer Rolle 19 auf einer am Schaltwagen 1 befestigten Konsole 20 ab.

Der Abtriebshebel 13 hat einen Gesamtwinkel von etwa 180 ° zurückgelegt und nimmt in der Betriebsstellung einen relativ kleinen Winkel β gegenüber der Senkrechten auf die Achse der Kulisse ein.

Durch diese kinematische Anordnung werden verhältnismäßig kleine Drehmomente zum Einfahren in die Trennkontakte benötigt, was eine günstige Vorbedingung für den Betrieb der Schaltwagen mit elektrischen Motorantrieben zur Fernsteuerung der Schaltanlagen bedeutet. Außerdem erzeugen die im Kurzschlußfall auf den Leistungsschalter geäußerten Kräfte in Trennrichtung ebenfalls kleine Reaktionsmomente auf den Vorschubantrieb.

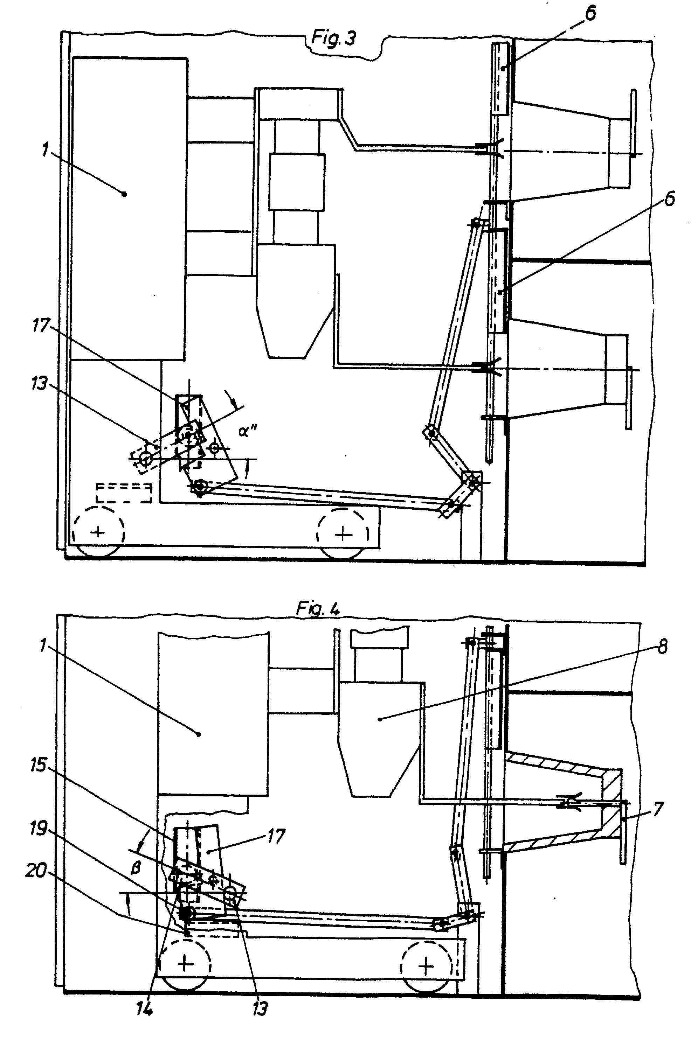

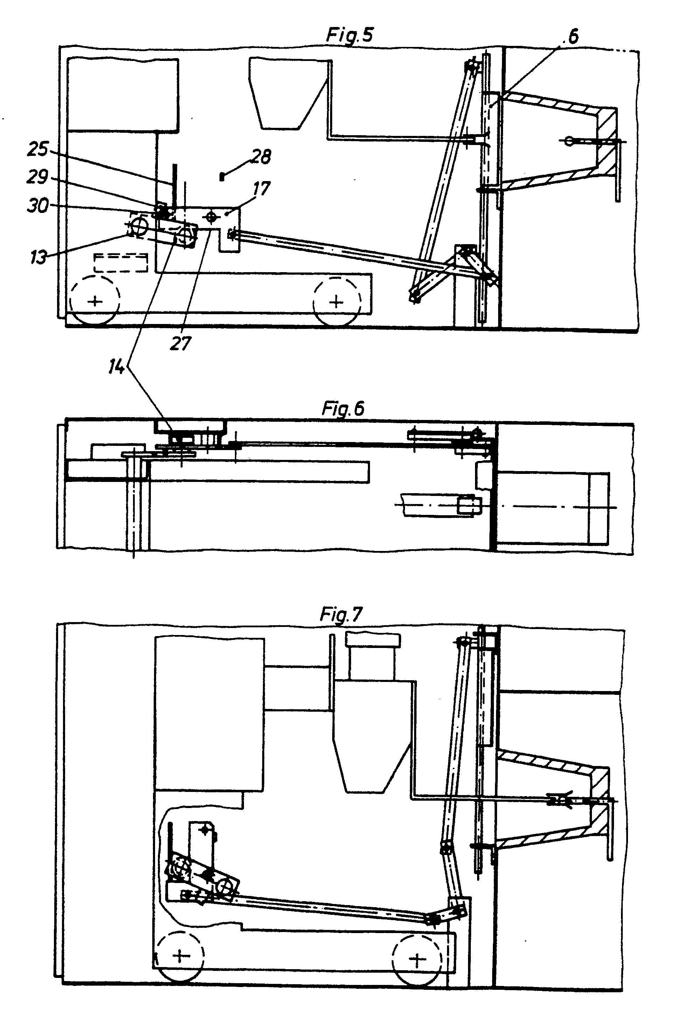

In Fig. 5, Fig. 6 und Fig. 7 ist eine abgewandelte Ausführung des mechanischen Systems dargestellt, bei der die vorher beschriebenen Funktionen mit vereinfachten Teilen ausgeführt werden. Diese Vereinfachung bezieht sich auf die Führung des Mitnehmers des Vorschubantriebs, während der Öffnungs- und Schließmechanismus unverändert bleibt.

Zur Führung des Mitnehmers 14 ist bei dieser Lösung in Einfahrrichtung nur ein gerader Steg 25 als Widerlager vorgesehen, während der winkelförmige Nocken 17 mit seiner Steuerkante 27 auch noch die Abstützung in Ausfahrrichtung vornimmt. Ein im Schaltschrank fixierter Anschlag 28 begrenzt dabei die Drehung des Nockens 17 in der Offenstellung der Blenden 6. Beim Einfahren des Leistungsschalters legt sich in der Trennstellung eine Nase 29 des Abtriebshebels 13 vor einen weiteren am Nocken 17 befestigten Anschlag 30 und verhindert dessen Weiterbewegung solange nicht der Vorschubantrieb betätigt wird.

**Patentansprüche**

1. Geschotteter Schaltschrank mit einem ein- und ausfahrbarem Leistungsschalter (8) auf einem Schaltwagen (1) oder Einschub, wobei zur Abdeckung der ortsfesten Trennkontakte (7) an der Sammelschiene und im Kabelanschlußraum (5) in der Trennstellung des Leistungsschalters (8) verschiebbare Blenden (6) vorgesehen sind, deren Öffnungs- und Schließmechanismus (18) in der Trennstellung mit dem Vorschubantrieb des Leistungsschalters (8) in Eingriff kommt und durch letzteren betätigbar ist,

   **dadurch gekennzeichnet,**

   daß der Vorschubantrieb und der Öffnungs- und Schließmechanismus (18) so zusammenwirken, daß die Öffnung der Blenden (6) bei Beginn der Vorschubbewegung abgeschlossen ist.

2. Schaltschrank nach Anspruch 1,

   **dadurch gekennzeichnet,**

   daß der Mitnehmer (14) des am Schaltwagen (1) drehbar gelagerten Abtriebshebels (13) des Vorschubantriebs (11) in der fest im Schaltschrank eingebauten im wesentlichen geradlinigen Kulisse (15) einen vorschubunwirksamen Wegabschnitt zurücklegt, in dem der Mitnehmer (14) gleichzeitig über den im Schaltschrank drehbar gelagerter Nocken (17) die Öffnung der Blenden (6) bewirkt, und daß der Mitnehmer (14) im vorschubwirksamen Wegabschnitt die Kulisse (15) zweimal in gegenläufiger Richtung durchläuft.

3. Schaltschrank nach Anspruch 1 und 2,

   **dadurch gekennzeichnet,**

   daß der Abtriebshebel (13) des Vorschubantriebs (11) einen Drehwinkel von nahezu 180 °

zurücklegt und in der Betriebsstellung des Leistungsschalters eine kurz vor der Totpunktlage liegende Endstellung in der Kulisse (15) erreicht.

4. Schaltschrank nach Anspruch 1 bis 3,

**dadurch gekennzeichnet,**

daß der Drehwinkelabschnitt während des vorschubunwirksamen Teils durch eine gedachte senkrechte Linie auf die Längsachse der Kulisse in zwei etwa symmetrísche Abschnitte unterteilt wird.

5. Schaltschrank nach Anspruch 1 bis 4,

**dadurch gekennzeichnet,**
daß die Kulisse (15) ungleich lange Schenkel (15a, 15b) hat, und daß der längere Schenkel (15b) die Wegbegrenzung des Leistungsschalters beim Einschieben von der Außen- in die Trennstellung bildet.

6. Schaltschrank nach Anspruch 1 bis 5,

**dadurch gekennzeichnet,**

daß sich der Nocken (17) in der Offenstellung der Blenden (6) während des vorschubwirksamen Abschnitts auf einer am Schaltwagen (1) angebrachten Konsole (20) abstützt.

7. Schaltschrank nach Anspruch 1 bis 4,

**dadurch gekennzeichnet,**

daß die Führung für den Mitnehmer (14) aus einem geradlinigen, im Schaltschrank fest angebrachten geraden Steg (25) und der dem Mitnehmer zugekehrten Steuerkante (27) des Nockens (17) in der Offenstellung der Blenden (6) gebildet wird.

8. Schaltschrank nach Anspruch 1 bis 4 und 7,

**dadurch gekennzeichnet,**

daß der Anschlag (28) im festen Teil des Schaltschrankes die Drehbewegung des Nokkens (17) in der Offenstellung der Blenden (6) begrenzt.

9. Schaltschrank nach Anspruch 1 bis 4, 7 und 8,

**dadurch gekennzeichnet,**

daß der Nocken (17) bei geschlossenen Blenden (6) die Einschubbewegung des Schaltwagens in der Trennstellung begrenzt.

10. Schaltschrank nach Anspruch 1 bis 9,

**dadurch gekennzeichnet,**

daß der Drehpunkt des Nockens (17) in Einfahrrichtung des Leistungsschalters hinter dem Steg (25) bzw. hinter der Kulisse (15) angeordnet ist.

11. Schaltschrank nach Anspruch 1 bis 10,

**dadurch gekennzeichnet,**

daß der Öffnungs- und Schließmechanismus für die Blenden (6) bei horizontaler Welle (12) an nur einer Seitenwand des Schrankes angeordnet ist.

12. Schaltschrank nach Anspruch 1 bis 10

**dadurch gekennzeichnet,**

daß der Öffnungs- und Schließmechanismus für die Blenden (6) bei vertikaler Welle (12) unter dem Schaltwagen an der Grundfläche des Schrankes angeordnet ist.

**Claims**

1. Partitioned switching cabinet with a retractable and extensible power switch (8) on a switching truck (1) or drawer, wherein, in order to cover the permanently mounted separating contacts (7) on the busbar and in the cable connection chamber (5), in the separation position of the power switch (8), displaceable shutters (6) are provided, of which the opening and closing mechanism (18), in the separation position, engages with the advance drive of the power switch (8) and can be operated by the latter, characterised in that the advance drive and the opening and closing mechanism (18) interact in such a way that the opening of the shutters (6) is sealed off at the commencement of the advance movement.

2. Switching cabinet in accordance with Claim 1, characterised in that the carrier (14) of the driven lever (13) belonging to the advance drive (11) and rotatably mounted on the switching truck (1) undergoes a section of travel which is ineffective for the feed movement in a substantially rectilinear guide (15) that is permanently built into the switching cabinet, that the carrier (14) simultaneously causes the opening of the shutters (6) via the cam (17) rotatably mounted in the switching cabinet and that the carrier (14) passes through the guide (15) twice in opposite directions in the section of travel that is effective for the feed.

3. Switching cabinet in accordance with Claims 1 and 2, characterised in that the driven lever (13) of the advance drive (11) rotates through an angle of almost 180° and, in the operating position of the power switch, reaches a final position in the guide (15) that is a short distance in front of the dead centre position.

4. Switching cabinet in accordance with Claims 1-3, characterised in that the section of the angle of rotation, during the part ineffective for the feed, is subdivided, by an imaginary vertical line onto the longitudinal axis of the guide, into two approximately symmetrical portions.

5. Switching cabinet in accordance with Claims 1-4, characterised in that the guide (15) has sides (15a,15b) of unequal length, and that the longer side (15b) forms the limit of the travel of the power switch on the insertion from the external into the separating position.

6. Switching cabinet in accordance with Claims 1-5, characterised in that the cam (17) rests on a bracket (20) mounted on the switching truck (1) when the shutters (6) occupy the open position, during that section of the travel which is effective for the feed.

7. Switching cabinet in accordance with Claims 1-4, characterised in that the guide for the carrier (14) is formed by a rectilinear straight web (25), permanently mounted in the switching cabinet, and by the control edge (27) of the cam (17) which faces towards the carrier with the shutters (6) in the open position.

8. Switching cabinet in accordance with Claims 1-4 and 7, characterised in that the stop (28) in the fixed part of the switching cabinet limits the rotary motion of the cam (17) when the shutters (6) occupy the open position.

9. Switching cabinet in accordance with Claims 1-4, 7 and 8, characterised in that the cam (17) limits the insertion movement of the switching truck in the separating position when the shutters (6) are closed.

10. Switching cabinet in accordance with Claims 1-9, characterised in that the rotation point of the cam (17), in the insertion direction of the power switch, is situated behind the web (25) or behind the guide (15).

11. Switching cabinet in accordance with Claims 1-10, characterised in that the opening and closing mechanism for the shutters (6) is situated on only one side wall of the cabinet with the shaft (12) horizontal.

12. Switching cabinet in accordance with Claims 1-10, characterised in that the opening and closing mechanism for the shutters (6) is situated underneath the switching truck on the base surface of the cabinet with the shaft (12) vertical.

**Revendications**

1. Armoire de commutation cloisonnée avec un commutateur de puissance (8) pouvant être enfoncé et retiré sur un chariot de commutation (1) ou un tiroir, tandis que des obturateurs coulissants (6) sont prévus pour recouvrir des contacts de coupure fixes (7) des barres omnibus et dans l'enceinte de raccordement des câbles (5) en position de coupure du commutateur de puissance (8), ces obturateurs ayant un mécanisme d'ouverture et de fermeture (18) qui vient engager la commande d'avance du commutateur de puissance (8) en position de coupure et peut être actionné par celui-ci, caractérisée en ce que la commande d'avance et le mécanisme d'ouverture et de fermeture (18) coopèrent de façon à ce que l'ouverture des obturateurs (6) soit achevée au début du mouvement d'avance.

2. Armoire de commutation selon la revendication 1, caractérisée en ce que le taquet (14) du levier d'extraction (13) de la commande d'avance (11) monté à pivot sur le chariot de commutation (1) parcourt une section de course sans effet sur l'avance dans la coulisse (15) essentiellement rectiligne montée dans l'armoire de commutation, pendant laquelle le taquet (14) provoque simultanément l'ouverture des obturateurs (6) au moyen de la came (17) montée à pivot dans l'armoire de commutation, et en ce que le taquet (14) parcourt deux fois la coulisse (15) en direction opposée dans la section de course ayant un effet sur l'avance.

3. Armoire de commutation selon les revendications 1 et 2, caractérisée en ce que le levier d'extraction (13) de la commande d'avance (11) parcourt un angle de rotation d'environ 180° et atteint, en position de fonctionnement du commutateur de commutation, une position terminale située peu avant la position du point mort dans la coulisse (15).

4. Armoire de commutation selon les revendications 1 à 3, caractérisée en ce que la section d'angle de rotation pendant la partie sans effet sur l'avance est subdivisée en deux sections à peu près symétriques par une ligne imaginaire perpendiculaire à l'axe longitudinal de la coulisse.

5. Armoire de commutation selon les revendications 1 à 4, caractérisée en ce que la coulisse (15) a des branches (15a, 15b) de longueur inégale et en ce que la plus longue branche (15b) constitue la limitation de course du commutateur de puissance au moment de l'enfoncement depuis l'extérieur en position de coupure.

6. Armoire de commutation selon les revendications 1 à 5, caractérisée en ce que la came (17) prend appui sur une console( 20) montée sur le chariot de commutation (1) en position d'ouverture des obturateurs (6) pendant la section ayant un effet sur l'avance.

7. Armoire de commutation selon les revendications 1 à 4, caractérisée en ce que le guidage pour le taquet( 14) est constitué par une nervure (25) droite et rectiligne montée de manière fixe dans l'armoire de commutation et du bord de guidage (27) de la came (17) tournée vers le taquet en position d'ouverture des obturateurs (6).

8. Armoire de commutation selon les revendications 1 à 4 et 7, caractérisée en ce que la butée (28) dans la partie fixe de l'armoire de commutation limite le mouvement de rotation de la came (17) en position d'ouverture des obturateurs (6).

9. Armoire de commuation selon les revendications 1 à 4, 7 et 8, caractérisée en ce que la came (17) limite, lorsque les obturateurs (6) sont fermés, le mouvement d'enfoncement du chariot de commutation en position de coupure.

10. Armoire de commutation selon les revendications 1 à 9, caractérisée en ce que le point de rotation de la came (17) en direction d'enfoncement du commutateur de puissance est disposé derrière la nervure (25) ou derrière la coulisse (15).

11. Armoire de commutation selon les revendications 1 à 10, caractérisée en ce que le mécanisme d'ouverture et de fermeture pour les obturateurs (6) est seulement disposé sur une paroi latérale de l'armoire si l'axe (12) est horizontal.

12. Armoire de commutation selon les revendications 1 à 10, caractérisée en ce que le mécanisme d'ouverture et de fermeture pour les obturateurs (6) est disposé sous le chariot de commutation et sur le fond de l'armoire si l'axe (12) est vertical.

Fig.1

Fig.2

Fig. 3

Fig. 4

Fig.5

Fig.6

Fig.7